(19) Europäisches Patentamt
European Patent Office
Office européen des brevets

(11) **EP 3 005 348 B1**

(12) **EUROPEAN PATENT SPECIFICATION**

(45) Date of publication and mention
of the grant of the patent:
**11.03.2020 Bulletin 2020/11**

(21) Application number: **13886305.5**

(22) Date of filing: **07.06.2013**

(51) Int Cl.:
*G10L 15/18* (2013.01)    *G10L 15/26* (2006.01)
*G06F 3/16* (2006.01)    *G06F 16/9032* (2019.01)
*G06F 16/957* (2019.01)

(86) International application number:
**PCT/US2013/044714**

(87) International publication number:
**WO 2014/196984 (11.12.2014 Gazette 2014/50)**

(54) **SPEECH-BASED SEARCH USING DESCRIPTIVE FEATURES OF SURROUNDING OBJECTS**

SPRACHBASIERTE SUCHE DURCH BESCHREIBUNGSFUNKTIONEN VON UMGEBUNGSOBJEKTEN

RECHERCHE PAR COMMANDE VOCALE UTILISANT DES ÉLÉMENTS DESCRIPTIFS D'OBJETS ENVIRONNANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.04.2016 Bulletin 2016/15**

(73) Proprietor: **Nuance Communications, Inc.**
**Burlington, MA 01803 (US)**

(72) Inventors:
• **KLEINDIENST, Jan**
**CZ-14800 Prague 4 - Chodov (CZ)**
• **KUNC, Ladislav**
**CZ-14800 Prague 4 - Chodov (CZ)**
• **LABSKY, Martin**
**CZ-14800 Prague 4 - Chodov (CZ)**
• **LENKE, Nils**
**53359 Rheinbach (DE)**
• **MACEK, Tomas**
**CZ-14800 Prague 4 - Chodov (CZ)**

(74) Representative: **South, Nicholas Geoffrey et al**
**A.A. Thornton & Co.**
**10 Old Bailey**
**London EC4M 7NG (GB)**

(56) References cited:
**US-A1- 2010 114 944    US-A1- 2011 093 158**
**US-A1- 2011 093 158    US-A1- 2011 172 873**
**US-A1- 2012 278 073    US-A1- 2012 278 073**
**US-A1- 2013 030 811    US-A1- 2013 060 811**
**US-B1- 7 036 128    US-B1- 7 137 126**

## Description

### TECHNICAL FIELD

The invention generally relates to natural language processing and understanding, and more specifically, to a natural language query arrangement for use in mobile applications.

### BACKGROUND ART

An automatic speech recognition (ASR) system determines a semantic meaning of a speech input or utterance. Typically, the input speech is processed into a sequence of digital speech feature frames. Each speech feature frame can be thought of as a multi-dimensional vector that represents various characteristics of the speech signal present during a short time window of the speech. For example, the multi-dimensional vector of each speech frame can be derived from cepstral features of the short time Fourier transform spectrum of the speech signal (MFCCs)-the short time power or component of a given frequency band-as well as the corresponding first- and second-order derivatives ("deltas" and "delta-deltas"). In a continuous recognition system, variable numbers of speech frames are organized as "utterances" representing a period of speech followed by a pause, which in real life loosely corresponds to a spoken sentence or phrase.

The ASR system compares the input utterances to find statistical acoustic models that best match the vector sequence characteristics and determines corresponding representative text associated with the acoustic models. More formally, given some input observations **A,** the probability that some string of words **W** were spoken is represented as $P(\mathbf{W}|\mathbf{A})$, where the ASR system attempts to determine the most likely word string:

$$\hat{\mathbf{W}} = \arg\max_{\mathbf{W}} P(\mathbf{W}\,|\,\mathbf{A})$$

Given a system of statistical acoustic models, this formula can be re-expressed as:

$$\hat{\mathbf{W}} = \arg\max_{\mathbf{W}} P(\mathbf{W})P(\mathbf{A}\,|\,\mathbf{W})$$

where P(A|W) corresponds to the acoustic models and P(W) reflects the prior probability of the word sequence as provided by a statistical language model.

The acoustic models are typically probabilistic state sequence models such as hidden Markov models (HMMs) that model speech sounds using mixtures of probability distribution functions (Gaussians). Acoustic models often represent phonemes in specific contexts, referred to as PELs (Phonetic Elements), e.g. triphones or phonemes with known left and/or right contexts. State sequence models can be scaled up to represent words as connected sequences of acoustically modeled phonemes, and phrases or sentences as connected sequences of words. When the models are organized together as words, phrases, and sentences, additional language-related information is also typically incorporated into the models in the form of a statistical language model.

The words or phrases associated with the best matching model structures are referred to as recognition candidates or hypotheses. A system can produce a single best recognition candidate - the recognition result - or multiple recognition hypotheses in various forms such as an N-best list, a recognition lattice, or a confusion network. Further details regarding continuous speech recognition are provided in U.S. Patent No. 5,794,189, entitled "Continuous Speech Recognition," and U.S. Patent No. 6,167,377, entitled "Speech Recognition Language Models."

Recently, ASR technology has advanced enough to have applications that are implemented on the limited footprint of a mobile device. This can involve a somewhat limited stand-alone ASR arrangement on the mobile device, or more extensive capability can be provided in a client-server arrangement where the local mobile device does initial processing of speech inputs, and possibly some local ASR recognition processing, but the main ASR processing is performed at a remote server with greater resources, then the recognition results are returned for use at the mobile device. U.S. Patent Publication 20110054899 describes a hybrid client-server ASR arrangement for a mobile device in which speech recognition can be performed locally by the device and/or remotely by a remote ASR server depending on one or more criteria such as time, policy, confidence score, network availability, and the like.

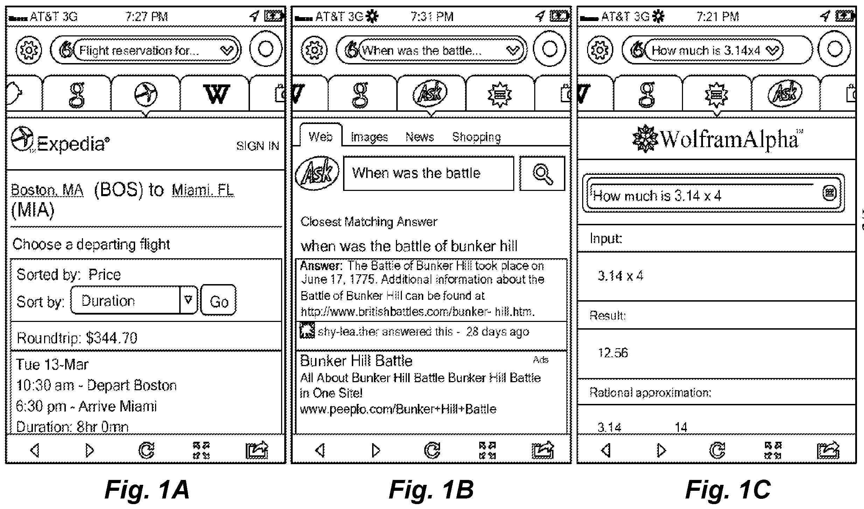

Natural Language Processing (NLP) and Natural Language Understanding (NLU) involve using computer processing to extract meaningful information from natural language inputs such as human generated speech and text, for example, ASR text results. One recent application of such NLU technology is processing speech and/or text queries in mobile devices such as smartphones. Figure 1 A-C shows some example screen shots of one such mobile device application, Dragon Go!, which processes speech query inputs and obtains simultaneous search results from a variety of top websites and content sources. Such applications require adding a natural language understanding component to an existing web search algorithm in order to extract semantic meaning from the input queries. This can involve using approximate string matching to discover semantic template structures. One or more semantic meanings can be assigned to each semantic template. Parsing rules and classifier training samples can be generated and used to train NLU models that determine query interpretations (sometimes referred to as query intents).

US2013030811 A1 discloses sensors within a vehicle monitor driver movement, such as face and head movement to ascertain the direction a driver is looking, and gestural movement to ascertain what the driver may be pointing at. This information is combined with video camera data taken of the external vehicle surroundings. The apparatus uses these data to assist the speech dialogue processor to disambiguate phrases uttered by the driver. The apparatus can issue informative responses or control vehicular functions based on queries automatically generated based on the disambiguated phrases.

US2012278073 A1 discloses a mobile system that includes speech-based and non-speech-based interfaces for telematics applications. The mobile system identifies and uses context, prior information, domain knowledge, and user specific profile data to achieve a natural environment for users that submit requests and/or commands in multiple domains. The disclosed system creates, stores and uses extensive personal profile information for each user, thereby improving the reliability of determining the context and presenting the expected results for a particular question or command. The disclosed system may organize domain specific behavior and information into agents that are distributable or updateable over a wide area network.

US7137126 B1 discloses a conversational computing system that provides a universal coordinated multi-modal conversational user interface (CUI) across a plurality of conversationally aware applications (i.e., applications that "speak" conversational protocols) and conventional applications. The conversationally aware maps, applications communicate with a conversational kernel via conversational application APIs. The conversational kernel controls the dialog across applications and devices (local and networked) on the basis of their registered conversational capabilities and requirements and provides a unified conversational user interface and conversational services and behaviors.

US2010114944 A1 discloses methods and systems for providing a voice interface. A classifier voice interface of a user terminal may receive a query, may parse the query to identify an attribute, and may process the query to select a first domain-specific voice interface of a plurality of domain-specific voice interface based on the attribute, wherein each of the domain-specific voice interface comprises specialized information to process queries of different types. The classifier voice interface may further instruct the first domain-specific voice interface to process the query.

US7036128 B1 discloses a highly mobile, ambient computing environment for serving a knowledge worker away from their desk. The discloses environment allows a knowledge worker to get increased leverage from personal, networked, and interactive computing devices while in their car, airplane seat, or in a conference room with others. An Open Agent Architecture is used to incorporate elements such as GPS agents, speech recognition, and opportunistic connectivity among meeting participants. Communication and cooperation between agents are brokered by one or more facilitators, which are responsible for matching requests, from users and agents, with descriptions of the capabilities of other agents.

SUMMARY

A first aspect of the invention provides a method according to claim 1.

A second aspect of the invention provides a computer program product according to claim 6. A third aspect of the invention provides an apparatus according to claim 7.

BRIEF DESCRIPTION OF THE DRAWINGS

Figure 1A-C shows various example screen shots from an ASR- NLU application for a mobile device.

Figure 2 shows various functional elements in a natural language query arrangement for a mobile environment.

Figure 3 shows various functional steps in a natural language query process.

DETAILED DESCRIPTION

Conventional speech-based natural language systems allow a user to search for information about objects by saying the object's name and then searching a database for this name. But this approach requires that the user has to remember the exact correct name of the object. Situations can suddenly arise in a vehicle environment where a driver is unexpectedly warned or informed about potential problems by various indicators, lights or sounds. In the stress of the immediate moment, a driver often does not remember the meaning of different indicators and warning lights. That hinders the driver's ability to quickly determine the best response that solves the issue.

An improved approach to this problem can be based on extracting object properties from a recognized natural language utterance spoken by the driver/user, and thereby allow the user to search for objects using natural language descriptive phrases such as:

- "I see the orange engine light blinking..."
- "The blue icon is shining..."
- "A buzzer sounded three times..."
- "The mountain on the left side..."

Thus embodiments of the invention are directed to a natural language query arrangement for a mobile environment which enables the user to use natural language to enter queries for information about the environment such as surrounding objects (landmarks, etc.) and in-car objects (lights, sounds, etc.) by entering typical descriptive information (position, color, type). The system then can perform advanced searching in knowledge bases such as the car owner's manual and point-of-interest databases using natural language descriptions of objects. Among other advantages, such arrangements should enable faster and safer resolution of vehicle-related events using a speech enabled guide or wizard. Both static and dynamic saliency can be exploited for reference resolution.

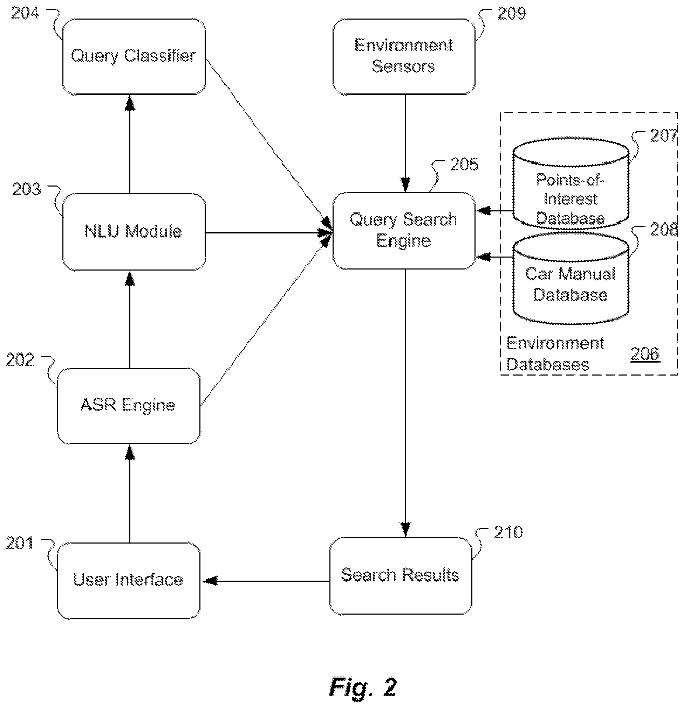

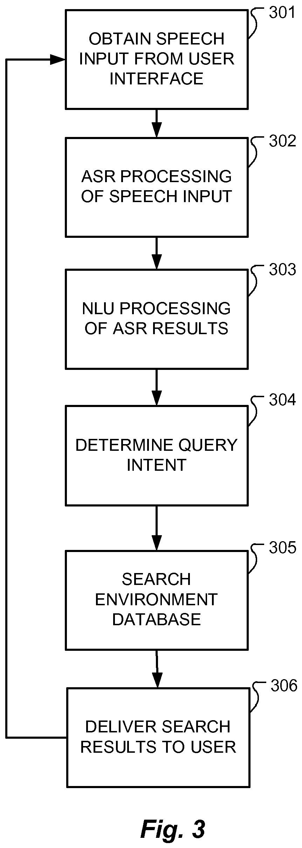

Figure 2 shows various functional elements in a natural language query arrangement and Figure 3 shows various functional steps in a natural language query process for a mobile environment according to an embodiment of the invention. A user interface 201 includes a microphone to obtain unknown speech inputs (one or more utterances or natural language queries), from a user (e.g., a driver or passenger traveling in a car), step 301, that describe properties of one or more objects in the environment such as the outside landscape or the interior of the vehicle.

In certain embodiments, the user interface 201 can be a hand held mobile device, a smart phone or an automobile head unit. In some embodiments, the user interface 201 includes a hand held mobile device in communication with an automobile head unit. The user interface 201 can be an application running on the hand held mobile device, smart phone or automobile head unit.

The speech inputs received by the user interface 201 are provided to an ASR engine 202 that produces corresponding recognition text, step 302. The ASR engine 202 can be a local embedded application, server-based, or a hybrid client/server arrangement. The ASR engine 202 can perform speech recognition using grammars and/or language models to produce the text.

A natural language understanding module 203 augments the text from the ASR engine 202 with NLU classes and annotations describing the requested object properties. The NLU module 203 can be a local embedded application, server-based, or a hybrid client/server arrangement.

The NLU module 203 extracts natural language concept information (object properties such as locations, shapes, colors, etc.) from the recognition text, step 303. In some embodiments, examples of the descriptive feature classes extracted by the NLU module 203 from the recognition text include:

- Color - object color description (e.g. white, yellow, light green, magenta...)
- Shape - object shape description (e.g. rectangular, oval, rounded, box, sphere...)
- Location - object location description (e.g. on the dashboard, in the middle, right, left...)
- Location-To-Object - object location description using another object (e.g. right to the speedometer, on the left side of dashboard...)

- Object-Inscription - object title/inscription (e.g. icon with ABS sign, icon with ESP acronym...)
- Visual-Behavior - visual behavior of object (e.g. blinking, illuminated...)
- Sound-Features - description of sounds (e.g. alarm played, beeping (beep)...) These feature classes are encoded as named entities in the transcribed user utterance. Using word-level annotations, the NLU module 203 can represent the NLU feature classes: "What does the <Visual-Behavior>blinking</Visual-Behavior> <Color>red</Color> icon <Location-To-Object>left to the speedometer</Location-To-Object> means?"

A query classifier 204 uses the recognition text and natural language concept information to assign a query intent to the speech input. The query intent can be a category, and can be related to one or more objects in the mobile environment referred to by the user in the input, step 304. The query classifier 204 can be a local embedded application, server-based, or a hybrid client/server arrangement.

An environment database 206 contains information descriptive of objects in the mobile environment which includes the environment in and around the vehicle containing the user and/or the environment around the smartphone receiving the speech input and delivering the search results. An environment database 206 can include a point-of-interest (POI) database 207 and/or a car manual database 208. An environment database 206 can be a local application onboard a vehicle or mobile application or can be situated in a hosted environment. The environment database 206 can be a hosted database from which information is retrieved by the query search engine 205 or other module of the arrangement.

Car manual database 208 can be an internal or external car owner's manual containing natural language concept information regarding the vehicle and its interior environment. The car manual database 208 can include information specific to a particular make/model of vehicle and/or can include information generic to any make/model of vehicle.

The car manual database 208 can be a hierarchical database of salient concepts from the automotive domain (e.g. Brakes -> Changing brakes, Navigation -> Search for POIs...) with full-text description and textual description of concept properties and features (location, color, shape, warning pattern, etc.) plus a mechanism to dynamically update the car manual database 208 based on information received from the car control system, e.g., if an error occurred and a related warning lamp has been activated.

The natural language concepts maintained in the car manual database 208 include both required and optional description fields. Description field categories can include:

- Name (title) of a concept - descriptive title of car specific concept (e.g. driving through water, changing windshield wipers, usage of spare tire...)

- Full-text description of a concept- Full-text paragraphs of a plain text that describes the concept.
- Procedure steps description - Some concepts are procedures (e.g. checking the engine oil, checking the brake fluid...) and need to be specified as a sequence of steps. This can be done by encoding the full-text description of each step separately (e.g. <item order="1">Move the button to unlock position</item> <item order="2">Press the unload button to eject the CD</item>...)
- Descriptive features - Features that describe the concept. The features can be location, shape, color, etc.
- Situation description - description of situations that can arise in connection with the concept or situations that the concept solves, (e.g. "spare tire change" concept - > my tire is broken).

The natural language query arrangement can stay aware of the current location of the vehicle and the environment database **206** can include a points-of-interest database **207** containing natural language concept information such as descriptive properties of one or more objects in the mobile environment such as objects in the landscape around the user. The objects in the points-of-interest database **207** are divided into object categories such as bridges, mountains, gas stations, restaurants, etc. The points-of-interest database **207** describes each object textually and includes location information such as geographic coordinates. Each concept includes one or more of the following descriptive fields:

- Category - Point-of-interest classification (e.g. swimming pool, hotel, restaurant, bridge...)
- Name (title) of a place - title of place (e.g. White House, Big Ben, Hilton hotel...)
- Full-text description of a place - Full-text paragraphs of a plain text that describes the place.
- Location - Position of the place - latitude and longitude coordinates.
- Descriptive features - Description of a place or landmark using features as color shape... (e.g. golden tower, red bridge...)

A query search engine **205** searches the environment database **206,** step **305,** based on the query intent, natural language concept information, and recognition text to determine corresponding search results. The query search engine **205** can be a local embedded application, server-based, or a hybrid client/server arrangement.

The extracted properties of the object referred to by the user are used as pointers to the concepts in the environment database **206.** For example, these properties can be individual words (e. g. "red", "blue", "left", ...) or multiword phrases (e. g. "instrument cluster", "windshield wiper", ...). The query search engine **205** can base its search on information from one or more environment sensors **209** measuring one or more properties of the mobile environment. The query search engine **205** discovers queries such as: "I see the orange light of engine blinking what should I do?" "The blue icon is shining what does this mean?" "What happens if I ignore the orange light warning?" etc.

Environment sensors **209** can be vehicle sensors characterizing the condition of various vehicle systems and objects (e.g., speed, direction, location, time of day, temperature, climate zone, urban/rural environment, landscape information, roadway conditions, hazards, traffic, position or characteristics of other vehicles). Environment sensors **209** can be onboard a vehicle or can be sensors of a mobile device (e.g., a handheld mobile or smartphone). The conditions can be derived from information received from environment sensors **209.** Query search engine **205** can directly determine the conditions or can receive the conditions from a separate module.

The query search engine **205** uses the correct specific search procedure according to the classification of the user's query by the query classifier **204:**

- General Definition - Asking for general definition of an object (e.g. keyless entry, what is the ESP, what is the rain sensor...)
- Question and Answers - Asking question that can be answered in natural language (e.g. what is the recommended inflation of front tires? Where is the fuel cap? How do I turn on windshield wipers? etc.
- Descriptive features query - Searching for an object using descriptive features that are not the object name (e.g. what is the mountain on the right side? I see an orange light blinking what should I do? etc.
- Procedure search - Querying to find out a guidance procedure (e.g. how to change a flat tire? How do I fill windshield washer? etc.

In the specific case of a descriptive features query search, a search index is created, for example by building a concept-term matrix that describes how strongly each term determines each concept by means of floating point score numbers. Some parts (e.g. titles, feature-based descriptions...) of index scores can be boosted or lowered according to their significance. The index can be divided into three parts:

- titles of concepts
- full-text of concepts
- features (properties) of concepts

During runtime, a user query is first tokenized into terms which are scored using index scores from the appropriate matrices. For example, if a term in the user query is annotated as one of the NLU classes (e.g. color, shape, location...); it is scored using the feature description index matrix. A list of results is then compiled such that the concept with the highest score is first and other concepts are ordered from the highest to the lowest score.

The query search engine 205 then summarizes information about relevant matching objects and presents its results to the user via the user interface **201** using synthesized speech and/or a multimodal user interface that supports other interaction mechanisms such as handwriting, keyboard input and other natural language inputs, step **306.** For example, the query search engine **205** can access and search troubleshooting or frequently asked question lists so that the described process acts to guide the user to identify and resolve the issue using a wizard technique.

Specific embodiments can take into account that some descriptions are more salient than others (esp. in the automotive field). Therefore, a model of concept saliency can be useful to improve accuracy of the concept result list from the query search engine **205.** Salience is related to objects, which are more or less salient to a given set of environmental circumstances. According to the concept saliency, the query search scores are lowered or boosted.

Model salience can be distinguished as static salience or dynamic salience. Static salience can be computed offline and stored together with other information in the environment database **206.** Factors influencing the saliency are:

- Location - Indicators in the center of dashboard or on a head-up display (HUD) are more salient than indicators located far from the driver's view.
- Color - signal colors (red, yellow etc.) make an object more salient than others.
- Size - bigger objects are more salient than others.
- Amount of text in the car manual (POI data base / other sources) available on this object. Objects (e.g. buttons) on which there is more information available in the car manual (measured by text size) are more salient than other objects.

In addition, dynamic saliency can be based on information available in a specific moment and is computed at runtime for the query search engine **205** describing objects that are related to an error state or other relevant event (incoming message, phone call etc.). This is often tied to a visual behavior - a blinking or illuminated sign (icon) is more salient than a dark one. Instead of computing a dynamic salience score for all objects, the system can keep a list of dynamically salient objects that is updated in regular intervals (e.g. every minute) or upon an asynchronous event (car sensor spots a problem and starts a flashing lamp).

User descriptions of objects can be ambiguous, e.g. "the red lamp" can refer to three red lamps in the vehicle cockpit. Especially when one of the lamps is much more salient to the user than similar objects, they are likely to not specify the object further. For example, when one of three red lamps of different size suddenly blinks the user will often just say: "what does the red lamp mean", not "what does the medium sized red button mean". Without taking saliency into account, the system would be forced to start a clarification dialog with the user ("which red lamp do you mean, the small, medium, or big one") which is potentially distracting. Instead embodiments having saliency models will work as follows. If the NLU analysis by the NLU module **203** returns a set of objects to which a certain phrase could refer that includes more than one object that fit the description, the system will use static and dynamic salience to try and resolve the ambiguity. If one of the candidate objects returned from the NLU analysis is in the list of dynamically salient objects, or if one has a much higher static saliency score than all others, than it is selected without further disambiguation.

In embodiments of the invention such described above, system users do not need to remember or know the name of a nearby object to search for information about that object. Describing the object/landmark to the system in natural language using its properties makes for a natural and intuitive interaction process.

NLU module **203,** query classifier **204,** and query search engine **205** can be embodied in one or more software modules or processors. In certain embodiments, query classifier **204** and query search engine **205** form one module and communicate in a hosted environment with one or more of user interface **201,** ASR engine **202,** NLU module **203,** environment database **206,** and sensors **209.**

In certain embodiments, query classifier **204** can receive information from ASR engine **202** and/or NLU module **203,** and determine intent of the user. The query classifier **204** can deliver to the query search engine **205** the recognition text, the natural language concept information and the query intent. The query classifier **204** can receive the search results from the query search engine **205** and deliver or control delivery of the search results to the user via the user interface **201.**

User interface **201** can deliver search results **210** via a display, e.g., an automobile head unit, a HUD or a screen of a mobile device or smartphone. In some embodiments, the search results **210** can be read aloud to the user via user interface **201.** Based on text output from the query search engine **205,** speech can be synthesized by user interface **201** locally or by a hosted module. In certain embodiments, query search engine **205** synthesizes speech based search results and delivers them to user interface **201** for read out to the user.

User interface **201** can utilize a wake up word to initiate the natural language query arrangement, or the natural language query arrangement can be always on and decipher requests. User interface **201** can employ a dialog with user to deliver more timely or accurate information, and can deliver an advertisement or third party information based on the intent of the query.

Embodiments of the invention can be implemented in part in any conventional computer programming language such as VHDL, SystemC, Verilog, ASM, etc. Embodiments of the invention can be implemented as pre-programmed hardware elements, other related components, or as a combination of hardware and software components.

Embodiments can be implemented in part as a computer program product for use with a computer system. Such implementation can include a series of computer instructions fixed either on a tangible medium, such as a computer readable medium (*e.g.,* a diskette, CD-ROM, ROM, or fixed disk) or transmittable to a computer system, via a modem or other interface device, such as a communications adapter connected to a network over a medium. The medium can be either a tangible medium (*e.g.*, optical or analog communications lines) or a medium implemented with wireless techniques (*e.g.,* microwave, infrared or other transmission techniques). The series of computer instructions embodies all or part of the functionality previously described herein with respect to the system. Those skilled in the art should appreciate that such computer instructions can be written in a number of programming languages for use with many computer architectures or operating systems. Furthermore, such instructions can be stored in any memory device, such as semiconductor, magnetic, optical or other memory devices, and can be transmitted using any communications technology, such as optical, infrared, microwave, or other transmission technologies. It is expected that such a computer program product can be distributed as a removable medium with accompanying printed or electronic documentation (*e.g.,* shrink wrapped software), preloaded with a computer system (*e.g.,* on system ROM or fixed disk), or distributed from a server or electronic bulletin board over the network (*e.g.,* the Internet or World Wide Web). Of course, some embodiments of the invention can be implemented as a combination of both software (*e.g.,* a computer program product) and hardware. Still other embodiments of the invention are implemented as entirely hardware, or entirely software (*e.g.,* a computer program product).

Although various exemplary embodiments of the invention have been disclosed, it should be apparent to those skilled in the art that various changes and modifications can be made which will achieve some of the advantages of the invention without departing from the true scope of the invention, as defined in the appended claims.

## Claims

1. A method for processing natural language queries in a vehicle environment employing at least one hardware implemented computer processor, the method comprising:

   extracting natural language concept information from text recognized by an automatic speech recognition (ASR) engine (202);

   using the text and the natural language concept information to assign to the speech input a query intent related to one or more in-vehicle objects in the vehicle environment; and

   based on the query intent, the natural language concept information, and the recognition text, searching a database (206) containing information descriptive of the one or more in-vehicle objects in the vehicle environment to determine corresponding search results, wherein the database includes a vehicle owner's manual, and wherein the database includes a model of concept saliency for the vehicle, and wherein the search results are ranked according to the model of concept saliency.

2. The method of claim 1 further comprising processing an unknown speech input from a user with the ASR engine to produce the text.

3. The method of claim 1 wherein the vehicle environment includes an environment around a smartphone receiving the speech input and delivering the search results.

4. The method of claim 1 wherein the database includes points of interest information descriptive of objects in the landscape around the vehicle.

5. The method of claim 1 further comprising searching the database based on information from one or more environment sensors measuring one or more properties.

6. A computer program product, tangibly embodied in a non-transitory computer-readable medium, for processing natural language queries in a vehicle environment, the computer program product including instructions adapted to cause a data processing apparatus to:

   extract natural language concept information from text recognized by an automatic speech recognition (ASR) engine (202);

   use the text and the natural language concept information to assign to the speech input a query intent related to one or more in-vehicle objects in the vehicle environment; and

   based on the query intent, the natural language concept information, and the recognition text, search an environment database (206) containing information descriptive of the one or more in-vehicle objects in the vehicle environment to determine corresponding search results, wherein the database includes a vehicle owner's manual, and wherein the database includes a model of concept saliency for the vehicle, and wherein the search results are ranked according to the model of concept saliency.

7. An apparatus for processing a natural language query related to one or more objects in a vehicle environment, the apparatus comprising:

a query classifier (204) for using (i) text recognized by an automatic speech recognition (ASR) engine (202) and (ii) natural language concept information extracted from the text to assign to the natural language query a query intent related to the one or more in-vehicle objects in the vehicle environment; and

a query search engine (205) for searching a database (206) based on the query intent, the natural language concept information, and the text to determine search results, wherein the database includes a vehicle owner's manual, and wherein the database includes a model of concept saliency for the vehicle, and wherein the search results are ranked according to the model of concept saliency.

8. The apparatus of claim 7 further comprising an ASR engine (202) for processing an unknown speech input from a user to produce the text.

9. The apparatus of claim 7 further comprising a natural language understanding module (203) for extracting the natural language concept information from the text.

10. The apparatus of claim 7 wherein the database (206) includes points of interest information descriptive of objects in the landscape around the vehicle.

11. The apparatus of claim 7 wherein the query search engine further bases its search on information from one or more environment sensors (209) measuring one or more properties.

12. The method according to claim 1, wherein the model of concept saliency determines a salience level of one or more of the in-vehicle objects based on the following factors: location, colour, size, and/or amount of text in the vehicle manual.

13. The method according to claim 1, wherein the model of concept saliency determines a salience level of one or more of the in-vehicle objects in a manner such that greater saliency is assigned to an active indicator in the vehicle than an inactive indicator.

14. The computer program product according to claim 6, wherein the model of concept saliency determines a salience level of one or more of the in-vehicle objects based on the following factors: location, colour, size, and/or amount of text in the vehicle manual.

15. The computer program product according to claim 6, wherein the model of concept saliency determines a salience level of one or more of the in-vehicle objects in a manner such that greater saliency is assigned to an active indicator in the vehicle than an inactive indicator.

16. The apparatus according to claim 7, wherein the model of concept saliency determines a salience level of one or more of the in-vehicle objects based on the following factors: location, colour, size, and/or amount of text in the vehicle manual.

17. The apparatus according to claim 7, wherein the model of concept saliency determines a salience level of one or more of the in-vehicle objects in a manner such that greater saliency is assigned to an active indicator in the vehicle than an inactive indicator.

## Patentansprüche

1. Verfahren zum Verarbeiten von Abfragen in natürlicher Sprache in einer Fahrzeugumgebung, die wenigstens einen in Hardware implementierten Computerprozessor verwendet, wobei das Verfahren Folgendes umfasst:

Extrahieren von Konzeptinformationen natürlicher Sprache aus von einem Modul (202) automatischer Spracherkennung (*automatic speech recognition* - ASR) erkanntem Text;

Verwenden des Textes und der Konzeptinformationen in natürlicher Sprache, um der Spracheingabe eine Abfrageabsicht in Bezug auf ein oder mehrere im Fahrzeug befindliche Objekte in der Fahrzeugumgebung zuzuweisen; und

auf der Grundlage der Abfrageabsicht, der Konzeptinformationen natürlicher Sprache und des Erkennungstextes, Durchsuchen einer Datenbank (206), die Informationen enthält, die das eine oder die mehreren im Fahrzeug befindlichen Objekte in der Fahrzeugumgebung beschreiben, um entsprechende Suchergebnisse zu bestimmen, wobei die Datenbank eine Fahrzeugbetriebsanleitung enthält, und wobei die Datenbank ein Modell einer Konzeptausprägung für das Fahrzeug enthält, und wobei die Suchergebnisse gemäß dem Modell der Konzeptausprägung eingestuft werden.

2. Verfahren nach Anspruch 1, ferner umfassend das Verarbeiten einer unbekannten Spracheingabe von einem Benutzer mit dem ASR-Modul zum Erzeugen des Textes.

3. Verfahren nach Anspruch 1, wobei die Fahrzeugumgebung eine Umgebung um ein Smartphone, das die Spracheingabe empfängt und die Suchergebnisse liefert, enthält.

4. Verfahren nach Anspruch 1, wobei die Datenbank Informationen zu Orten von Interesse, die Objekte in der Landschaft um das Fahrzeug herum beschreiben, enthält.

5. Verfahren nach Anspruch 1, ferner umfassend das Durchsuchen der Datenbank auf der Grundlage von Informationen von einem oder mehreren Umgebungssensoren, die eine oder mehrere Eigenschaften messen.

6. Computerprogrammprodukt, das in einem nichtflüchtigen computerlesbaren Medium physisch eingebettet ist, zum Verarbeiten von Abfragen in natürlicher Sprache in einer Fahrzeugumgebung, wobei das Computerprogrammprodukt Anweisungen enthält, die angepasst sind, um zu veranlassen, dass eine Datenverarbeitungsvorrichtung Folgendes durchführt:

    Extrahieren von Konzeptinformationen natürlicher Sprache aus von einem Modul (202) automatischer Spracherkennung (ASR) erkanntem Text;
    Verwenden des Textes und der Konzeptinformationen natürlicher Sprache, um der Spracheingabe eine Abfrageabsicht in Bezug auf ein oder mehrere im Fahrzeug befindliche Objekte in der Fahrzeugumgebung zuzuweisen; und
    auf der Grundlage der Abfrageabsicht, der Konzeptinformationen natürlicher Sprache und des Erkennungstextes, Durchsuchen einer Umgebungsdatenbank (206), die Informationen enthält, die das eine oder die mehreren im Fahrzeug befindlichen Objekte in der Fahrzeugumgebung beschreiben, um entsprechende Suchergebnisse zu bestimmen, wobei die Datenbank eine Fahrzeugbetriebsanleitung enthält, und wobei die Datenbank ein Modell einer Konzeptausprägung für das Fahrzeug enthält, und wobei die Suchergebnisse gemäß dem Modell der Konzeptausprägung eingestuft werden.

7. Vorrichtung zum Verarbeiten einer Abfrage in natürlicher Sprache in Bezug auf ein oder mehrere Objekte in einer Fahrzeugumgebung, wobei die Vorrichtung Folgendes umfasst:

    einen Abfrageklassifikator (204) zum Verwenden von (i) Text, der von einem Modul (202) automatischer Spracherkennung (ASR) erkannt wurde, und (ii) Konzeptinformationen natürlicher Sprache, die von dem Text extrahiert wurden, um der Abfrage in natürlicher Sprache eine Abfrageabsicht in Bezug auf das eine oder die mehreren im Fahrzeug befindlichen Objekte in der Fahrzeugumgebung zuzuweisen; und
ein Abfragesuchmodul (205) zum Durchsuchen einer Datenbank (206) auf Grundlage der Abfrageabsicht, der Konzeptinformationen natürlicher Sprache und des Textes, um die Suchergebnisse zu bestimmen, wobei die Datenbank eine Fahrzeugbetriebsanleitung enthält, und wobei die Datenbank ein Modell einer Konzeptausprägung für das Fahrzeug enthält, und wobei die Suchergebnisse gemäß dem Modell der Konzeptausprägung eingestuft werden.

8. Vorrichtung nach Anspruch 7, ferner umfassend ein ASR-Modul (202) zum Verarbeiten einer unbekannten Spracheingabe von einem Benutzer zum Erzeugen des Textes.

9. Vorrichtung nach Anspruch 7, ferner umfassend ein Modul (203) zum Verstehen natürlicher Sprache zum Extrahieren der Konzeptinformationen natürlicher Sprache aus dem Text.

10. Vorrichtung nach Anspruch 7, wobei die Datenbank (206) Informationen zu Orten von Interesse, die Objekte in der Landschaft um das Fahrzeug herum beschreiben, enthält.

11. Vorrichtung nach Anspruch 7, wobei das Abfragesuchmodul seine Suche ferner auf Informationen von einem oder mehreren Umgebungssensoren (209), die eine oder mehrere Eigenschaften messen, stützt.

12. Verfahren nach Anspruch 1, wobei das Modell der Konzeptausprägung einen Ausprägungsgrad von einem oder mehreren der im Fahrzeug befindlichen Objekte auf Grundlage der folgenden Faktoren bestimmt: Standort, Farbe, Größe und/oder Textmenge im Fahrzeughandbuch.

13. Verfahren nach Anspruch 1, wobei das Modell der Konzeptausprägung einen Ausprägungsgrad von einem oder mehreren der im Fahrzeug befindlichen Objekte derart bestimmt, dass einer aktiven Anzeige im Fahrzeug eine größere Ausprägung zugewiesen wird als einer inaktiven Anzeige.

14. Computerprogrammprodukt nach Anspruch 6, wobei das Modell der Konzeptausprägung einen Ausprägungsgrad von einem oder mehreren der im Fahrzeug befindlichen Objekte auf Grundlage der folgenden Faktoren bestimmt: Standort, Farbe, Größe und/oder Textmenge im Fahrzeughandbuch.

15. Computerprogrammprodukt nach Anspruch 6, wobei das Modell der Konzeptausprägung einen Ausprägungsgrad von einem oder mehreren der im Fahrzeug befindlichen Objekte derart bestimmt, dass einer aktiven Anzeige im Fahrzeug eine größere Ausprägung zugewiesen wird als einer inaktiven Anzeige.

**16.** Vorrichtung nach Anspruch 7, wobei das Modell der Konzeptausprägung einen Ausprägungsgrad von einem oder mehreren der im Fahrzeug befindlichen Objekte auf Grundlage der folgenden Faktoren bestimmt: Standort, Farbe, Größe und/oder Textmenge im Fahrzeughandbuch.

**17.** Vorrichtung nach Anspruch 7, wobei das Modell der Konzeptausprägung einen Ausprägungsgrad von einem oder mehreren der im Fahrzeug befindlichen Objekte derart bestimmt, dass einer aktiven Anzeige im Fahrzeug eine größere Ausprägung zugewiesen wird als einer inaktiven Anzeige.

**Revendications**

**1.** Procédé pour traiter des interrogations de langage naturel dans un environnement de véhicule employant au moins un processeur informatique mis en œuvre par matériel, le procédé comprenant :

extraire des informations de concept de langage naturel à partir d'un texte reconnu par un moteur de reconnaissance automatique de la parole (ASR) (202) ;
utiliser le texte et les informations de concept de langage naturel pour affecter à l'entrée de parole une intention d'interrogation associée à un ou plusieurs objets en véhicule dans l'environnement de véhicule ; et
sur la base de l'intention d'interrogation, des informations de concept de langage naturel et du texte de reconnaissance, rechercher dans une base de données (206) contenant des informations descriptives du ou des objets en véhicule dans l'environnement de véhicule pour déterminer des résultats de recherche correspondants, la base de données comprenant un manuel de propriétaire de véhicule, et la base de données comprenant un modèle de saillance de concept pour le véhicule, et les résultats de recherche étant classés selon le modèle de saillance de concept.

**2.** Procédé selon la revendication 1, comprenant en outre le traitement d'une entrée de parole inconnue en provenance d'un utilisateur avec le moteur d'ASR pour produire le texte.

**3.** Procédé selon la revendication 1, dans lequel l'environnement de véhicule comprend un environnement autour d'un téléphone intelligent recevant l'entrée de parole et délivrant les résultats de recherche.

**4.** Procédé selon la revendication 1, dans lequel la base de données comprend des informations de points d'intérêt descriptives d'objets dans le paysage autour du véhicule.

**5.** Procédé selon la revendication 1, comprenant en outre la recherche dans la base de données sur la base d'informations en provenance d'un ou plusieurs capteurs d'environnement mesurant une ou plusieurs propriétés.

**6.** Produit programme d'ordinateur, incorporé de manière tangible dans un support lisible par ordinateur non transitoire, pour traiter des interrogations de langage naturel dans un environnement de véhicule, le produit programme d'ordinateur comprenant des instructions conçues pour amener un appareil de traitement de données à :

extraire des informations de concept de langage naturel à partir d'un texte reconnu par un moteur de reconnaissance automatique de la parole (ASR) (202) ;
utiliser le texte et les informations de concept de langage naturel pour affecter à l'entrée de parole une intention d'interrogation associée à un ou plusieurs objets en véhicule dans l'environnement de véhicule ; et
sur la base de l'intention d'interrogation, des informations de concept de langage naturel et du texte de reconnaissance, rechercher dans une base de données d'environnement (206) contenant des informations descriptives du ou des objets en véhicule dans l'environnement de véhicule pour déterminer des résultats de recherche correspondants, la base de données comprenant un manuel de propriétaire de véhicule, et la base de données comprenant un modèle de saillance de concept pour le véhicule, et les résultats de recherche étant classés selon le modèle de saillance de concept.

**7.** Appareil pour traiter une interrogation de langage naturel associée à un ou plusieurs objets dans un environnement de véhicule, l'appareil comprenant :

un classificateur d'interrogation (204) pour utiliser (i) un texte reconnu par un moteur de reconnaissance automatique de la parole (ASR) (202) et (ii) des informations de concept de langage naturel extraites à partir du texte pour affecter à l'interrogation de langage naturel une intention d'interrogation associée à l'objet en véhicule ou aux objets en véhicule dans l'environnement de véhicule ; et

un moteur de recherche d'interrogation (205) pour rechercher dans une base de données (206) sur la base de l'intention d'interrogation, des informations de concept de langage naturel et du texte pour déterminer des résultats de recherche, la base de données comprenant un manuel de propriétaire de véhicule, et la base de données comprenant un modèle de saillance de concept pour le véhicule, et les résultats de recherche étant classés selon le modèle de saillance de concept.

8. Appareil selon la revendication 7, comprenant en outre un moteur d'ASR (202) pour traiter une entrée de parole inconnue en provenance d'un utilisateur pour produire le texte.

9. Appareil selon la revendication 7, comprenant en outre un module de compréhension de langage naturel (203) pour extraire les informations de concept de langage naturel à partir du texte.

10. Appareil selon la revendication 7, dans lequel la base de données (206) comprend des informations de points d'intérêt descriptives d'objets dans le paysage autour du véhicule.

11. Appareil selon la revendication 7, dans lequel le moteur de recherche d'interrogation base en outre sa recherche sur des informations en provenance d'un ou plusieurs capteurs d'environnement (209) mesurant une ou plusieurs propriétés.

12. Procédé selon la revendication 1, dans lequel le modèle de saillance de concept détermine un niveau de saillance d'un ou plusieurs des objets en véhicule sur la base des facteurs suivants : emplacement, couleur, taille et/ou quantité de texte dans le manuel de véhicule.

13. Procédé selon la revendication 1, dans lequel le modèle de saillance de concept détermine un niveau de saillance d'un ou plusieurs des objets en véhicule d'une manière telle qu'une saillance plus importante est affectée à un indicateur actif dans le véhicule par rapport à un indicateur inactif.

14. Produit programme d'ordinateur selon la revendication 6, dans lequel le modèle de saillance de concept détermine un niveau de saillance d'un ou plusieurs des objets en véhicule sur la base des facteurs suivants : emplacement, couleur, taille et/ou quantité de texte dans le manuel de véhicule.

15. Produit programme d'ordinateur selon la revendication 6, dans lequel le modèle de saillance de concept détermine un niveau de saillance d'un ou plusieurs des objets en véhicule d'une manière telle qu'une saillance plus importante est affectée à un indicateur actif dans le véhicule par rapport à un indicateur inactif.

16. Appareil selon la revendication 7, dans lequel le modèle de saillance de concept détermine un niveau de saillance d'un ou plusieurs des objets en véhicule sur la base des facteurs suivants : emplacement, couleur, taille et/ou quantité de texte dans le manuel de véhicule.

17. Appareil selon la revendication 7, dans lequel le modèle de saillance de concept détermine un niveau de saillance d'un ou plusieurs des objets en véhicule d'une manière telle qu'une saillance plus importante est affectée à un indicateur actif dans le véhicule par rapport à un indicateur inactif.

**Fig. 1A**

AT&T 3G   7:27 PM

Flight reservation for....

SIGN IN

Expedia®

Boston, MA (BOS) to Miami, FL (MIA)

Choose a departing flight

Sorted by: Price

Sort by: Duration   Go

Roundtrip: $344.70

Tue 13-Mar
10:30 am - Depart Boston
6:30 pm - Arrive Miami
Duration: 8hr 0min

**Fig. 1B**

AT&T 3G   7:31 PM

When was the battle....

Web   Images   News   Shopping

Ask   When was the battle

Closest Matching Answer

when was the battle of bunker hill

Answer: The Battle of Bunker Hill took place on June 17, 1775. Additional information about the Battle of Bunker Hill can be found at http://www.britishbattles.com/bunker- hill.htm.

shy-lea:ther answered this - 28 days ago

Bunker Hill Battle   Ads
All About Bunker Hill Battle Bunker Hill Battle in One Site!
www.peepo.com/Bunker+Hill+Battle

**Fig. 1C**

AT&T 3G   7:21 PM

How much is 3.14x4

WolframAlpha™

How much is 3.14 x 4

Input:

3.14 x 4

Result:

12.56

Rational approximation:

3.14    14

**Fig. 2**

```
        ┌──────────────────┐ ⌐ 301
        │  OBTAIN SPEECH    │
    ──→ │ INPUT FROM USER   │
        │    INTERFACE      │
        └──────────────────┘
                 │
                 ↓
        ┌──────────────────┐ ⌐ 302
        │  ASR PROCESSING   │
        │  OF SPEECH INPUT  │
        └──────────────────┘
                 │
                 ↓
        ┌──────────────────┐ ⌐ 303
        │  NLU PROCESSING   │
        │  OF ASR RESULTS   │
        └──────────────────┘
                 │
                 ↓
        ┌──────────────────┐ ⌐ 304
        │ DETERMINE QUERY   │
        │     INTENT        │
        └──────────────────┘
                 │
                 ↓
        ┌──────────────────┐ ⌐ 305
        │     SEARCH        │
        │  ENVIRONMENT      │
        │    DATABASE       │
        └──────────────────┘
                 │
                 ↓
        ┌──────────────────┐ ⌐ 306
        │ DELIVER SEARCH    │
        │ RESULTS TO USER   │
        └──────────────────┘
```

*Fig. 3*

## REFERENCES CITED IN THE DESCRIPTION

**Patent documents cited in the description**

- US 5794189 A
- US 6167377 A
- US 20110054899 A
- US 2013030811 A1
- US 2012278073 A1
- US 7137126 B1
- US 2010114944 A1
- US 7036128 B1